# EUROPEAN PATENT SPECIFICATION

(11) **EP 1 778 766 B1**
(45) Date of publication and mention of the grant of the patent: **30.03.2011**
(21) Application number: 05770696.2
(22) Date of filing: 09.08.2005
(51) Int. Cl.: C08J 3/22, D01F 1/04, D01F 1/06, C08K 5/01, C08K 5/103, C08K 3/00, C08K 5/52, C08K 5/524, C08K 5/13

(54) **CARRIER LIQUID FOR AGENT CONCENTRATES AND USE THEREOF**
TRÄGERFLÜSSIGKEIT FÜR WIRKSTOFFKONZENTRATE UND DEREN VERWENDUNG
LIQUIDE PORTEUR POUR CONCENTRES D"AGENT ET UTILISATION DE CELUI-CI

(30) Priority: 12.08.2004 DE 102004039183
(43) Date of publication of application: 02.05.2007
(73) Proprietor: Schill + Seilacher GmbH, 71032 Böblingen (DE)
(72) Inventor: RING, Horst, 71034 Böblingen (DE); HUSMANN, Martin, 73630 Remshalden (DE); WEIGEL, Jürgen, 79639 Grenzach-Wyhlen (DE)
(74) Representative: Prinz & Partner
(86) International application number: PCT/EP2005/008657
(87) International publication number: WO 2006/015855

(56) References cited:
- EP-A- 0 926 179
- EP-A- 1 243 641
- EP-A1- 0 713 884
- WO-A-00/66659
- GB-A- 1 457 094
- US-A- 3 844 713
- US-A- 3 962 189
- US-A- 4 167 503
- US-A- 4 601 840
- US-A1- 2002 198 122
- US-A1- 2003 102 462
- US-A1- 2003 171 227
- US-A1- 2007 128 536
- US-B1- 6 383 635
- Anonymus: "Fractional Distillation of Crude Oil" 30 April 2010 (2010-04-30), Retrieved from the Internet: URL:http://www.elmhurst.edu/~chm/onlcourse /chm110/outlines/distill.html [retrieved on 2010-04-30]

## Description

The invention relates to a carrier liquid for agent concentrate and the use thereof, particularly for those agent concentrates that are added to polyester polymerizates which are suitable for melt spinning in order to produce textile fibers, technical fibers or injection-molded parts therefrom, in which the agent or the agents from the concentrate is/are evenly spread over the entire polymer mass.

It is known to dye polyester and polyamide fibers by bath dyeing (high-temperature method, thermosol method, reactive dyeing) or by spin dyeing (beater dyeing), i.e. to incorporate an agent, for example in the form of a color pigment into the fibers.

The principle of the bath dyeing consists in that the dye is allowed to penetrate more or less into the fiber. Under suitable conditions (duration of the treatment, temperature), the fiber is permeated by the dye or by any agent, for example a fungicide. Here, there is no limitation for the selection of the hues. However, unlike in textile fibers, in technical fibers the fastnesses obtained up to now are generally not sufficient.

This is the reason why in the case of technical fibers the beater dyeing is referred in which master batches on the basis of the polymerizate whereof the fiber is made are used as dye concentrates. However, due to the high thermal stress during the production and the use of the master batches, only thermostable dye may be used. The esthetic effects, namely the brilliance and the luminosity, as can be obtained in the bath dyeing, leave much to be desired in the beater dyeing. For this reason it would be welcome to have the possibility to use at least the same dye range in the beater dyeing as in the bath dyeing.

In the production of bottles and other hollow bodies of polyester, it is already known to add liquid concentrates containing the dyes to the polymer material. Liquid concentrates offer the advantage that a broad range of dyes may be used and that the dyeing process is substantially simplified.

But the dye concentrates used in the bottle production do not meet the requirements that have to be fulfilled in the production of polymer fibers. For example, the dye quantities have to be ten times as high as in the bottle production with regard to the color depth to be obtained. The quantity of carrier liquid which is introduced in the polymer with the dye concentrates also increases at least to the same degree.

WO 00/66659 discloses a polymer additive for addition to a thermoplastic moulding composition comprising polyethylene terephthalate or a copolyester thereof. The polymer additive comprises a hydroxylic compound which is uniformly distributed in a polyester-compatible organic liquid carrier. The polyester-compatible organic liquid carrier includes hydrocarbons, hydrocarbon mixtures, alcohols, esters and mixtures of two or more thereof. Preferably the liquid carrier is an oil-based vehicle such as the material sold as Clearslip^{®} 2 and Clearslip^{®} 3 by ColorMatrix Europe Ltd. The hydroxylic compound can be used in combination with an antioxidant, the antioxidant being preferably selected from hindered phenol antioxidants, phosphite antioxidants, phosphonate antioxidants, phosphonite antioxidants, phosphate antioxidants, and lactone antioxidants.

US 4,167,503 describes a liquid additive concentrate composition consisting essentially of a carrier comprising an alkylated phenoxy poly(ethyleneoxy)ethanol and an additive. The ethoxylated alkylphenol vehicle employed is available from Diamond-Shamrock under the trade name of NOP-COSTAT HS and has a flash point of 288°C. The composition can additionally contain antioxidants which are selected from the group of hindered phenols. The composition can be used for incorporating a colorant or other additives in a polymer.

US 2003/0102462 A1 teaches a stabilising system for improving the melt viscosity of polyolefin resin during fibre processing. The stabilizing system consists essentially of a phenolic antioxidant, a liquid phosphite, and a liquid carrier. The phenolic antioxidant is octadecyl 3,5-di-tert-butyl-4hydroxycinnamate, the liquid phosphite is trisnonylphenol phosphite, and the liquid carrier is mineral oil.

GB 1 457 094 discloses a pigment preparation containing an inorganic pigment, a resin containing carbodiimide groups and an organic solvent free from amino groups. In one example, the organic solvent is diphenyl-2-ethylhexyl phosphate.

EP 1 243 641 A1 describes a lubricating oil composition which comprises a base oil and a compound selected from cyclic organic phosphorous compounds. The base oil is selected from purified mineral oils, alkylbenzenes, poly-α-olefins, polyalkylene glycols, polyvinyl ethers, polyesters and polycarbonates The lubricating oil composition can further comprise phenolic antioxidants such as 2,6-di-tert-butyl-4-methylphenol, 2,6-di-tert-butyl-4-ethyhlphenol and 2,2'-methylene-bis(4-methyl-6-tert-butylphenol).

US 4,601,840 teaches a lubricant composition which is suitable for the lubrication of bearings comprising among others a synthetic ester having a viscosity of 15 to 300 centistokes at 40°C, the composition having a viscosity of 125 to 750 centistokes at 40°C. The composition may further contain phenolic antioxidants.

US 6,383,635 B1 discloses a method of coloring melt spun condensation polymers while avoiding hydrolytic degradation and maintaining the melt viscosity of the polymer. The method comprises adding a liquid dispersion of a colorant to the melt phase of a condensation polymer, wherein the colorant is dispersed in a non-aqueous organic liquid that is soluble in melt phase polyester, and that has a boiling point above 300 °C.

When using the carrier liquids known so far, a degradation, i.e. a breakdown of the polymer and thus an impairment of the mechanical properties of the polymerizate however occurs, which in turn would lead to disturbances in the spinning process and in the further processing during the production of fibers.

This is why the object of the invention is to provide a carrier liquid for agent concentrates which may be added to polymerizates which are suitable for melt spinning and from which textile fibers, technical fibers or injection-molded parts can be produced, without the risk of a polymer degradation. The carrier liquid should furthermore be able to introduce high agent concentrations into the polymer in order to keep the required carrier liquid quantity as low as possible and thus to counteract a dilution of the polymer melt that is to be processed in the melt spinning method.

According to the invention, this object is achieved by the carrier liquid having the features of claim 1.

Advantageous further developments of the carrier liquid according to the invention additionally comprise the features of at least one of claims 2 to 11.

The carrier liquid according to the invention is preferably used for the production of an agent concentrate containing color pigments, bactericides and/or fungicides for polymerizates that are suitable for melt spinning. The use of the carrier liquid according to the invention is however not limited thereto. Basically, any agent, for example a flameproofing agent, too, may be transported in the polymerizate and thus finally in the fibers by means of the carrier liquid as long as it is compatible with the carrier liquid and the polymerizate to be finished.

The agent concentrate containing the carrier liquid according to the invention is advantageously used for spin dyeing textile fibers and technical fibers, particularly for spin dyeing partially oriented yarns (POY-yarns). The carrier liquid according to the invention comprises three components, namely
a) a base oil as main constituent having a boiling point of more than 300°C at normal pressure, and selected from the group consisting of TMP-trioleate and an alkylated aromatic hydrocarbon;
b) at least one antioxidant acting as radical trap; and
c) at least one compound which deactivates catalysts for the polymerization of fiber-forming materials that are suitable for melt spinning.

A thermostable ester oil, namely TMP-trioleate, is preferably used as base oil.

Other preferred base oils are alkylated aromatic hydrocarbons such as for example a C18 to C30 alkyl benzene derivative.

Preferably, the base oil has a viscosity (at room temperature) of less than 500 mPas.

Antioxidants which are suitable for the purposes according to the invention and act as radical trap are those that are based on phosphites or sterically hindered phenols, for example trisnonylphenylphosphite and 4,4-butylidene-bis-(6-tert-butyl-m-cresol).

The radical traps reduce the thermal decomposition of the polymers as well as that of the liquid. The thermal decomposition of the liquid which may lead to the degradation of the polymerizate is avoided by a suitable choice of the antioxidants.

According to the invention, isopropylated triarylphosphates and diphenyl-(2-ethylhexyl)phosphate are preferably used as catalyst deactivators. These deactivators block the residual quantities of polymerization catalysts in the polymerizate, for example Sb(III)-catalysts and Ti-catalysts. But color pigments which may operate as catalysts are also blocked by these deactivators.

The radical traps and the catalyst deactivators together also lead to synergistic effects and decelerate for example the polymer degradation processes favored by residual quantities of catalysts.

The carrier liquid according to the invention has particularly the advantage that the physicochemical properties of the polymerizates that are suitable for melt spinning are maintained to the extent that the resulting polymer melt remains spinnable, more specifically even if larger quantities of carrier liquid (up to 10 wt%) have to be incorporated in a polymer matrix, for example made of PET.

In comparison with the known bath method initially described, the liquid concentrate method is substantially ecologically more compatible since no waste water is produced. With the new method it is further possible to respond to market or fashion requirements in a more flexible way since the quantities of transition waste which arise during a color change are much smaller than in the use of solid master batches. As a result, it is also possible to realize smaller production quantities of polymer fibers economically. Furthermore, an extended hue range with esthetic effects that are more attractive is available.

A preferred embodiment of the carrier liquid according to the invention consists of 94.2 wt% TMP-trioleate, 0.4 wt% trisnonylphenylphosphite, 0.4 wt% 4,4-butylidene-bis-(6-tert-butyl-m-cresol) and 5 wt% isopropylated triarylphosphates, and is water-free.

For testing purposes, this carrier liquid according to the invention was mixed with PET in a special melting device at 300°C under nitrogen by continuous stirring for 15 minutes (which approximately corresponds to the residence time of the polymer melt from the extruder to the spinneret). The polymer samples were then rapidly cooled and their relative viscosities were determined. The relative or intrinsic viscosity is a measure for the mean molecular mass of the polymer.

Pure glycerol trioleate which is used as carrier liquid for dye concentrates for the dyeing of PET bottles served as reference substance. In comparison with the spin dyeing, the bottle dyeing however requires only approximately a tenth of the pigment quantities for the dyeing, and so a correspondingly low amount of carrier liquid is required. Studies have shown that the use of the reference substance in the high concentration range, as is required for the spin dyeing, leads to a strong polymer degradation. The strength of the partially oriented yarns that are produced in this way is insufficient and not suitable for a subsequent texture.

In comparison therewith, the polymerizate samples which contain approximately 5 wt% of the carrier liquid of the present invention have a higher relative viscosity or a less strong polymer degradation. Due to the combination of the TMP-trioleate with radical traps and catalyst deactivators it was possible to obtain a further increase of the relative viscosity and thus a great approximation to the ideal value of the blind sample (dried PET).

Even after the addition of different dye dispersions to the polymer samples with the carrier liquid according to the invention and to polymer samples with the reference substance, i.e. glycerol trioleate, it appeared that the relative viscosity was principally reduced in all cases since the pigments support a polymer degradation, but in comparison with the reference tests, the degradation is less pronounced when the carrier liquid according to the invention is used. In the subsequent spin and texture tests it was possible to produce partially oriented yarns which could be textured without any problems. The strength and the extension as well as the surging limits met all requirements made to filaments of polyethylene terephthalate, which is not possible with the reference substance, i.e. glycerol trioleate.

## Claims

1. A carrier liquid for agent concentrates which are added to polyester polymerizates that are suitable for melt spinning, the carrier liquid comprises three components, namely
a) a base oil as main constituent having a boiling point of more than 300°C at normal pressure, and selected from the group consisting of TMP-trioleate and an alkylated aromatic hydrocarbon;
b) at least one antioxidant acting as a radical trap wherein said at least one antioxidant is selected from the group of a phosphite and a sterically hindered phenol; and
c) at least one compound which deactivates catalysts for the polymerization of fiber-forming materials that are suitable for melt spinning, wherein said compound that deactivates catalysts comprises at least one phosphate as a catalyst deactivator.

2. The carrier liquid according to claim 1, **characterized in that** the base oil is TMP-trioleate.

3. The carrier liquid according to claim 1, **characterized in that** the base oil consists of alkylated aromatic hydrocarbons.

4. The carrier liquid according to claim 3, **characterized in that** the base oil is alkyl benzene.

5. The carrier liquid according to any one of claims 1 to 4, **characterized in that** the antioxidant is trisnonylphenylphosphite and/or 4,4-butylidene-bis-(6-tert-butyl-m-cresol).

6. The carrier liquid according to any one of claims 1 to 5, **characterized in that** the phosphate is an isopropylated triarylphosphate and/or diphenyl-(2-ethylhexyl)phosphate.

7. The carrier liquid according to any of claims 1 to 6, **characterized in that** the base oil accounts for at least 90 wt % of the liquid.

8. The carrier liquid according to any of claims 1 to 7, **characterized in that** the catalyst deactivator accounts for at most 9 wt % of the liquid.

9. Use of the carrier liquid according to any of claims 1 to 8 for producing an agent concentrate for polyester polymerizates that are suitable for melt spinning wherein the agent concentrate further contains at least one of a color pigment, a bactericide and a fungicide.

10. Use of an agent concentrate for polyester polymerizates that are suitable for melt spinning, containing the carrier liquid according to any of claims 1 to 8 for spin dyeing textile fibers and technical fibers.

11. Use according to claim 10 for spin dyeing partially oriented yarns.

## Patentansprüche

1. Trägerflüssigkeit für Wirkstoffkonzentrate, die schmelzspinnfähigen Polyester-Polymerisaten zugesetzt werden, wobei die Trägerflüssigkeit drei Komponenten umfasst, nämlich
a) ein Basisöl als Hauptbestandteil mit einem Siedepunkt von mehr als 300°C bei Normaldruck, das aus der aus TMP-Trioleat und einem alkylierten aromatischen Kohlenwasserstoff bestehenden Gruppe ausgewählt ist;
b) mindestens ein als Radikalfänger wirksames Antioxidans, wobei das mindestens eine Antioxidans aus der Gruppe eines Phosphits und eines sterisch gehinderten Phenols ausgewählt ist; und
c) mindestens eine Verbindung, die Katalysatoren für die Polymerisation von schmelzspinnfähigen Faserstoffen desaktiviert, wobei die Verbindung, die Katalysatoren desaktiviert, als Katalysator-Deaktivator mindestens ein Phosphat enthält.

2. Trägerflüssigkeit nach Anspruch 1, **dadurch gekennzeichnet, dass** das Basisöl TMP-Trioleat ist.

3. Trägerflüssigkeit nach Anspruch 1, **dadurch gekennzeichnet, dass** das Basisöl aus alkylierten aromatischen Kohlenwasserstoffen besteht.

4. Trägerflüssigkeit nach Anspruch 3, **dadurch gekennzeichnet, dass** das Basisöl Alkylbenzol ist.

5. Trägerflüssigkeit nach einem der Ansprüche 1 bis 4, **dadurch gekennzeichnet, dass** das Antioxidans Trisnonylphenylphosphit und/oder 4,4-Butyliden-bis-(6-tert.-butyl-m-kresol) ist.

6. Trägerflüssigkeit nach einem der Ansprüche 1 bis 5, **dadurch gekennzeichnet, dass** das Phosphat ein isopropyliertes Triarylphosphat und/oder Diphenyl-(2-ethylhexyl)phosphat ist.

7. Trägerflüssigkeit nach einem der Ansprüche 1 bis 6, **dadurch gekennzeichnet, dass** das Basisöl mindestens 90 Gew.-% der Flüssigkeit ausmacht.

8. Trägerflüssigkeit nach einem der Ansprüche 1 bis 7, **dadurch gekennzeichnet, dass** der Katalysator-Deaktivator höchstens 9 Gew.-% der Flüssigkeit ausmacht.

9. Verwendung der Trägerflüssigkeit nach einem der Ansprüche 1 bis 8 zur Herstellung eines Wirkstoffkonzentrats für schmelzspinnfähige Polyester-Polymerisate, wobei das Wirkstoffkonzentrat ferner ein Farbpigment und/oder ein Bakterizid und/oder ein Fungizid enthält.

10. Verwendung eines die Trägerflüssigkeit nach einem der Ansprüche 1 bis 8 enthaltenden Wirkstoffkonzentrats für schmelzspinnfähige Polyester-Polymerisate zur Spinnfärbung von Textilfasern und von technischen Fasern.

11. Verwendung nach Anspruch 10 zur Spinnfärbung von POY-Garnen.

## Revendications

1. Liquide porteur pour concentrés de matières actives qui sont ajoutés à des polymères de polyester qui se prêtent au filage à chaud, le liquide porteur comprenant trois composants, à savoir
a) une huile de base servant de constituant principal avec un point d'ébullition de plus de 300°C à pression normale, laquelle est choisie parmi le groupe constitué par des TMP trioléates et par un hydrocarbure aromatique alkylé ;
b) au moins un antioxydant servant de piège à radicaux, ledit au moins un antioxydant étant choisi parmi le groupe d'un phosphite et d'un phénol stériquement empêché ; et
c) au moins une composition qui désactive des catalyseurs pour la polymérisation de matières fibreuses susceptibles d'être filées à chaud, la composition qui désactive des catalyseurs contenant au moins un phosphate en tant que désactivant de catalyseur.

2. Liquide porteur selon la revendication 1, **caractérisé en ce que** l'huile de base est du TMP trioléate.

3. Liquide porteur selon la revendication 1, **caractérisé en ce que** l'huile de base est constituée par des hydrocarbures aromatiques alkylés.

4. Liquide porteur selon la revendication 3, **caractérisé en ce que** l'huile de base est du benzène d'alkyle.

5. Liquide porteur selon l'une des revendications 1 à 4, **caractérisé en ce que** l'antioxydant est du tris(nonylphényle) phosphite et du 4,4'-butylidènebis(6-tert-butyle-m-crésol).

6. Liquide porteur selon l'une des revendications 1 à 5, **caractérisé en ce que** le phosphate est un triarylphosphate isopropylé et/ou du diphenyl-2-ethylhexyl phosphate.

7. Liquide porteur selon l'une des revendications 1 à 6, **caractérisé en ce que** l'huile de base constitue au moins 90 % en poids du liquide.

8. Liquide porteur selon l'une des revendications 1 à 7, **caractérisé en ce que** le désactiveur de catalyseur constitue au plus 9 % en poids du liquide.

9. Utilisation du liquide porteur selon l'une des revendications 1 à 8 pour fabriquer un concentré de matière active pour polymères de polyester qui se prêtent au filage à chaud, le concentré de matière active contenant en outre un pigment coloré et/ou un bactéricide et/ou un fongicide.

10. Utilisation d'un concentré de matière active pour polymères de polyester qui se prêtent au filage à chaud, contenant le liquide porteur selon l'une des revendications 1 à 8, pour la coloration au filage de fibres textiles et de fibres techniques.

11. Utilisation selon la revendication 10 pour la coloration au filage de fils partiellement orientés.
